# EUROPEAN PATENT APPLICATION

(11) **EP 4 841 108 A1**
(43) Date of publication of application: **18.11.2026**
(21) Application number: 24925757.7
(22) Date of filing: 12.09.2024
(51) Int. Cl.: F04B 39/16, F04B 15/08, F04B 53/20

(54) **BOOSTER PUMP AND FLUID SUPPLY SYSTEM**

(30) Priority: 21.02.2024 JP 2024024642
(71) Applicant: Mitsubishi Heavy Industries, Ltd., Chiyoda-ku Tokyo 100-8332 (JP)
(72) Inventor: MATSUBAYASHI, Toshiki, Tokyo 100-8332 (JP); FUKUTA, Hidetoshi, Yokohama-shi, Kanagawa 231-8715 (JP)
(74) Representative: Cabinet Beau de Loménie
(86) International application number: PCT/JP2024/032636
(87) International publication number: WO 2025/177604

(57) **Abstract**

A pressurizing pump and a fluid supply system include a cylinder having a compression chamber, a piston movably supported inside the cylinder and configured to compress a fluid sucked into the compression chamber, a suction valve that sucks the fluid from a fluid suction path into the compression chamber, a discharge valve that discharges the fluid compressed by the piston, and a strainer provided in the fluid suction path. The strainer includes a filter that has a mesh shape, and a first support member and a second support member that sandwich the filter from both sides in a thickness direction and allow the fluid to pass therethrough.

## Description

### Field

The present disclosure relates to a pressurizing pump and a fluid supply system.

### Background

As a system for realizing carbon neutrality, it is considered to apply hydrogen gas as a fuel. Hydrogen is stored in a tank in the state of liquid hydrogen, and the liquid hydrogen stored in the tank is vaporized to form hydrogen gas. The hydrogen gas is supplied to, for example, a fuel cell and a hydrogen engine. A hydrogen supply system includes a pressurizing pump that pressurizes the liquid hydrogen. As the pressurizing pump, for example, there is a technique described in Patent Literature 1.

### Citation List

### Patent Literature

Patent Literature 1: JP 2015-501901 A

### Summary

### Technical Problem

A pressurizing pump includes a cylinder and a piston movable in the cylinder. The pressurizing pump pressurizes liquid hydrogen supplied to a compression chamber of the cylinder by compressing the liquid hydrogen through the movement of the piston, and discharges the liquid hydrogen to the outside. Meanwhile, foreign matter may be mixed in the liquid hydrogen pressurized by the pressurizing pump. When the foreign matter mixed in the liquid hydrogen enters a sliding part of the pressurizing pump, the pressurizing pump may be damaged. In Patent Literature 1, a conical filter is disposed between a chamber and a pumping chamber (compression chamber), and foreign matter mixed in the liquid hydrogen is received by the filter to prevent entry of the foreign matter into the sliding part. However, the pressurizing pump sucks the liquid hydrogen into the compression chamber when the piston moves to one side, and pressurizes and discharges the liquid hydrogen in the compression chamber when the piston moves to the other side. Therefore, when the pressurizing pump is in operation, a reciprocating pressure acting on the filter may cause the filter to flap and become damaged.

The present disclosure solves the above-described problem, and an object of the present disclosure is to provide a pressurizing pump and a fluid supply system that suppress mixing of foreign matter into the inside and improve durability of a filter. Solution to Problem

To achieve the above object, a pressurizing pump according to the present disclosure includes: a cylinder that includes a compression chamber; a piston that is movably supported inside the cylinder to compress a fluid sucked into the compression chamber; a suction valve that sucks the fluid into the compression chamber from a fluid suction path; a discharge valve that discharges the fluid compressed by the piston; and a strainer that is provided in the fluid suction path. The strainer includes a filter that has a mesh shape, and a first support member and a second support member that sandwich the filter from both sides in a thickness direction and allow the fluid to pass through.

A fluid supply system according to the present disclosure includes: a compression device that includes the above-described pressurizing pump and compresses a fluid; an evaporation device that vaporizes the fluid compressed by the compression device; and a dispenser that supplies gas vaporized by the evaporation device.

### Advantageous Effects of Invention

According to a pressurizing pump and a fluid supply system of the present disclosure, it is possible to suppress mixing of foreign matter into the inside and improve durability of a filter.

### Brief Description of Drawings

FIG. 1 is a schematic diagram illustrating an overall configuration of a hydrogen supply system according to a first embodiment.
FIG. 2 is a schematic configuration diagram illustrating a compression device.
FIG. 3 is a longitudinal sectional view illustrating a main part of a pressurizing pump according to the first embodiment.
FIG. 4 is a cross-sectional view taken along line IV-IV in FIG. 3 illustrating a suction valve.
FIG. 5 is a longitudinal sectional view illustrating a strainer.
FIG. 6 is a cross-sectional view illustrating a main part of a filter unit.
FIG. 7 is a front view of a filter.
FIG. 8 is a front view illustrating a first support member and a second support member.
FIG. 9 is a schematic diagram illustrating a main part of a pressurizing pump according to a second embodiment.
FIG. 10 is a schematic diagram illustrating a main part of a pressurizing pump according to a third embodiment.

### Description of Embodiments

Hereinafter, preferred embodiments of the present disclosure will be described in detail with reference to the drawings. Note that the present disclosure is not limited by the embodiments, and in a case where there are a plurality of embodiments, the present disclosure also includes a combination of the embodiments. In addition, components in the embodiments include those that can be easily assumed by those skilled in the art, those that are substantially the same, and those in a so-called equivalent range.

### [First Embodiment]

### <Hydrogen supply system>

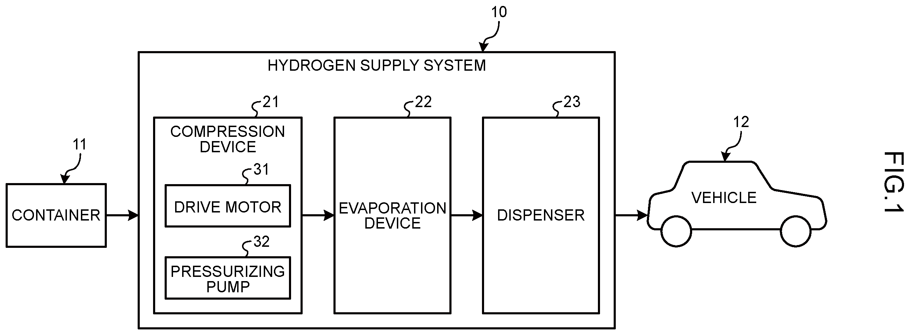

FIG. 1 is a schematic diagram illustrating an overall configuration of a hydrogen supply system according to a first embodiment.

As illustrated in FIG. 1, a hydrogen supply system (fluid supply system) 10 supplies (replenishes) liquid hydrogen (fluid) stored in a container 11 to a power source of a vehicle 12 as hydrogen gas (gas) having a predetermined pressure. Here, the power source is, for example, a fuel cell, a hydrogen engine, or the like, and is mounted on the vehicle 12. The hydrogen supply system 10 is, for example, a so-called hydrogen station that supplies (replenishes) hydrogen gas as fuel to the power source of the vehicle 12. However, the hydrogen supply system 10 is not limited to a system that supplies hydrogen gas to the power source of the vehicle 12, and includes a system that supplies hydrogen gas to a trailer tank for transporting hydrogen. Further, the hydrogen supply system 10 operates not only in the case of hydrogen but also in the case of compressing and supplying a fluid including a low-temperature fluid (e.g., liquid hydrogen, liquid nitrogen, liquid oxygen, liquefied carbon dioxide gas, liquefied natural gas, and liquefied propane gas).

The hydrogen supply system 10 includes a compression device 21, an evaporation device 22, and a dispenser 23. The compression device 21 compresses liquid hydrogen (low-temperature fluid) supplied from the container 11 to a predetermined high pressure (high pressure state) set in advance. The evaporation device 22 vaporizes high-pressure liquid hydrogen compressed by the compression device 21 to generate hydrogen gas. The dispenser 23 fills the power source of the vehicle 12 with hydrogen gas generated by the evaporation device 22.

The compression device 21 compresses the liquid hydrogen stored in the container 11 to the predetermined high pressure, but is not limited to this configuration. For example, when the container 11 stores hydrogen gas, the compression device 21 may compress the hydrogen gas stored in the container 11 to a predetermined high pressure.

The compression device 21 includes a drive motor 31 and a pressurizing pump 32. The drive motor 31 is an electric motor that can be driven by power supplied from the outside. The number of rotations of the drive motor 31 is controlled by an inverter (not illustrated). The drive motor 31 transmits a rotational force to the pressurizing pump 32. The pressurizing pump 32 is operated by the rotational force of the drive motor 31.

### <Compression device>

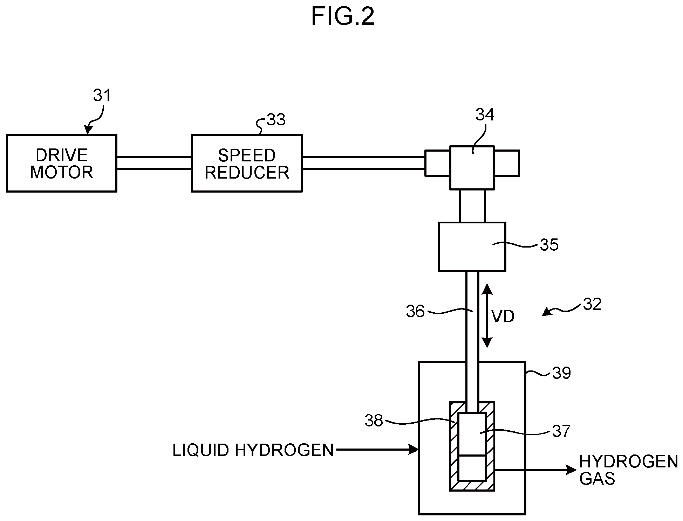

FIG. 2 is a schematic configuration diagram illustrating the compression device.

As illustrated in FIG. 2, the drive motor 31 is connected to the pressurizing pump 32 via a speed reducer 33. The speed reducer 33 decelerates the rotational force of the drive motor 31 and transmits the rotational force to the pressurizing pump 32. The pressurizing pump 32 is a reciprocating pump. The pressurizing pump 32 operates by converting the rotational force of the drive motor 31 decelerated by the speed reducer 33 into reciprocating power. The pressurizing pump 32 alternately performs suction and compression (pressurization) of the liquid hydrogen by the reciprocating power to compress the sucked liquid hydrogen into a predetermined high pressure state and discharge the liquid hydrogen to the outside.

The pressurizing pump 32 includes a crank mechanism 34, a crosshead 35, a piston rod 36, a piston 37, and a cylinder block 38.

The crank mechanism 34 converts the rotational force transmitted from the speed reducer 33 into linear reciprocating power and transmits the linear reciprocating power to the crosshead 35. The crosshead 35 reciprocates in a vertical direction VD by the reciprocating power in the vertical direction VD transmitted from the crank mechanism 34. The piston rod 36 has an upper end connected to the crosshead 35 and the other end connected to the piston 37. The cylinder block 38 has a hollow shape, and the piston 37 is movably supported inside in the vertical direction VD.

A lower part of the pressurizing pump 32, in other words, the cylinder block 38 is disposed inside a vessel 39. The vessel 39 is a heat insulating vacuum vessel, and the inside thereof is maintained in a vacuum state together with the pressurizing pump 32. Liquid hydrogen is supplied to the inside of the vessel 39, and subjected to an atmospheric pressure state.

When the pressurizing pump 32 operates, first, the liquid hydrogen in the vessel 39 is sucked into the cylinder block 38 in a suction process in which the piston 37 ascends. Next, in a compression process in which the piston 37 descends, the liquid hydrogen inside the cylinder block 38 is compressed, and high-pressure liquid hydrogen is discharged to the outside of the vessel 39.

### <Structure of pressurizing pump>

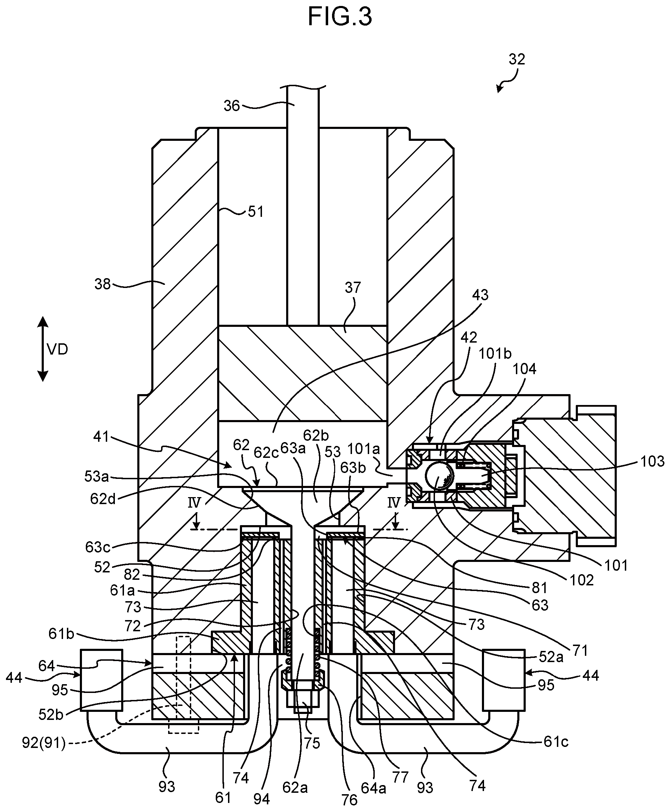

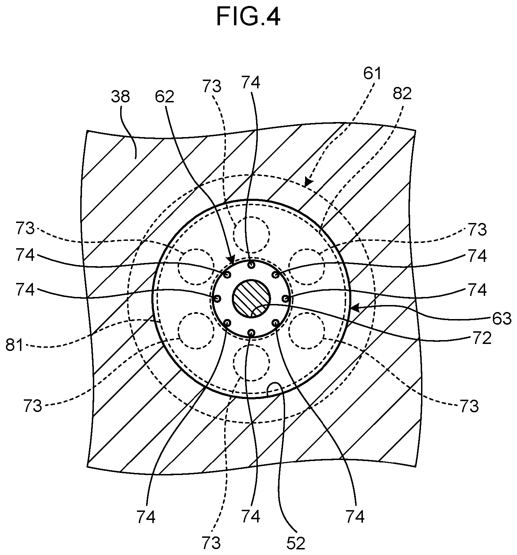

FIG. 3 is a longitudinal cross-sectional view illustrating a main part of the pressurizing pump of the first embodiment, and FIG. 4 is a cross-sectional view taken along line IV-IV in FIG. 3 illustrating a suction valve.

As illustrated in FIG. 3, the pressurizing pump 32 includes a suction valve 41 and a discharge valve 42. When opened, the suction valve 41 sucks liquid hydrogen into compression chamber 43. When opened, the discharge valve 42 discharges high-pressure liquid hydrogen compressed in the compression chamber 43 to the outside.

The cylinder block 38 is disposed in the vertical direction VD. In the cylinder block 38, a fitting hole 51 opened upward is formed in an upper part, and a recess 52 opened downward is formed in a lower part. The fitting hole 51 and the recess 52 have a cylindrical shape, and communicate with each other through a flow hole 53 having the same cylindrical shape. The piston 37 is fitted into the fitting hole 51 of the cylinder block 38 from above and is movably supported in the vertical direction VD. When the piston 37 is fitted into the fitting hole 51 of the cylinder block 38, the compression chamber 43 defined by the piston 37 and the fitting hole 51 is formed. The fitting hole 51, the recess 52, the flow hole 53, the piston 37, and the compression chamber 43 are concentrically arranged.

As illustrated in FIGS. 3 and 4, the suction valve 41 is disposed in the recess 52 of the cylinder block 38. The suction valve 41 includes a valve casing 61, a first valve body 62, a second valve body 63, and a pressing member 64.

The valve casing 61 has a convex cylindrical shape. The valve casing 61 includes a main body 61a having a small diameter and a flange 61b having a diameter larger than the diameter of the main body 61a. The valve casing 61 is configured such that the flange 61b is integrally provided in a lower part of the main body 61a. The recess 52 has a small-diameter hole 52a and a large-diameter hole 52b having a larger diameter than the small-diameter hole 52a. The recess 52 is configured such that the large-diameter hole 52b is integrally provided in a lower part of the small-diameter hole 52a. In the valve casing 61, the main body 61a is fitted into the small-diameter hole 52a of the recess 52, and the flange 61b is fitted into the large-diameter hole 52b of the recess 52. At this time, in the valve casing 61, a lower surface of the flange 61b is continuous with a lower surface of the cylinder block 38 without a step. In the valve casing 61, since a length of the main body 61a is shorter than a length of the small-diameter hole 52a, a front end surface of the main body 61a and a bottom surface of the small-diameter hole 52a face each other with a clearance. Therefore, a first space portion 71 is defined between the recess 52 of the cylinder block 38 and the valve casing 61.

The valve casing 61 is provided with a through hole 72 in the vertical direction VD in a center part. In the valve casing 61, a plurality of suction holes 73 (six holes in the present embodiment) are provided in the vertical direction VD at intervals in a circumferential direction on an outer peripheral side in a radial direction. Further, in the valve casing 61, a plurality of first discharge holes 74 (eight holes in the present embodiment) are provided in the vertical direction VD at intervals in the circumferential direction on the through hole 72 side in the radial direction. The suction holes 73 suck liquid hydrogen into the first space portion 71 from the outside. The first discharge holes 74 discharge liquid hydrogen or hydrogen gas accumulated in the first space portion 71 to the outside. The outside is outside the cylinder block 38 and inside the vessel 29 (see FIG. 2), and is filled with liquid hydrogen in a low pressure state of about atmospheric pressure to 1 MPaG.

The first valve body 62 includes a rod 62a and a head 62b. In the first valve body 62, the head 62b is integrally provided at an upper end of the rod 62a. The rod 62a is disposed inside the valve casing 61 in the vertical direction VD. In other words, in the first valve body 62, the rod 62a is fitted into the through hole 72 of the valve casing 61 and is movably supported in an axial direction (vertical direction VD). The head 62b has a substantially truncated cone shape whose diameter increases upward. In the first valve body 62, a flat upper surface of the head 62b is a pressure receiving surface 62c, and a curved lower surface of the head 62b is a seat surface 62d. In the first valve body 62, the pressure receiving surface 62c faces the compression chamber 43.

On the other hand, a diameter of the cylinder block 38 increases upward so that an upper part of the flow hole 53 has the same shape as the head 62b, and is provided with a valve seat 53a. In the first valve body 62, the head 62b is disposed in the upper part of the flow hole 53, and the seat surface 62d can be seated on the valve seat 53a. The first valve body 62 moves downward, and closes the flow hole 53 to block communication between a compression chamber 13 and the first space portion 71 when the seat surface 62d of the head 62b is seated on the valve seat 53a. On the other hand, when the first valve body 62 moves upward and the seat surface 62d of the head 62b is separated from the valve seat 53a, the flow hole 53 is opened to allow the compression chamber 13 and the first space portion 71 to communicate with each other.

In the first valve body 62, a lower end of the rod 62a protrudes below the valve casing 61. A spring receiver 76 is fixed to the lower end of the rod 62a by a nut 75. A compression coil spring 77 as a biasing member is disposed between a spring receiving portion 61c formed in the valve casing 61 and the spring receiver 76 of the first valve body 62. The compression coil spring 77 biases the first valve body 62 downward with respect to the valve casing 61. In other words, the first valve body 62 is biased in a direction in which the seat surface 62d of the head 62b is seated on the valve seat 53a of the flow hole 53 by a biasing force of the compression coil spring 77, and is biased and supported at a position where the flow hole 53 is closed and communication between the compression chamber 13 and the first space portion 71 is blocked.

The second valve body 63 is a plate-like member with a disk shape, and is provided with an opening 63a at the center. An outer diameter of the second valve body 63 is substantially the same as an outer diameter of the valve casing 61, and an inner diameter is larger than a diameter at the position where the plurality of first discharge holes 74 are formed. The second valve body 63 is disposed in the first space portion 71 defined between the recess 52 of the cylinder block 38 and the valve casing 61. The second valve body 63 is movably supported in the vertical direction VD in the first space portion 71 with respect to the cylinder block 38 and the valve casing 61. In addition, ring-shaped seal members 81 and 82 are provided between the second valve body 63 and the main body 61a of the valve casing 61. The seal member 81 is disposed on the outer peripheral side of the main body 61a, and the seal member 82 is disposed on the inner peripheral side of the main body 61a. In other words, the seal members 81 and 82 are disposed on both sides in the radial direction of the main body 61a with the plurality of suction holes 73 interposed therebetween. The second valve body 63 has an upper surface serving as a pressure receiving surface 63b and a lower surface serving as a seat surface 63c in contact with the seal members 81 and 82. The pressure receiving surface 63b of the second valve body 63 faces the flow hole 53. In the second valve body 63, when the seat surface 63c is seated on the seal members 81 and 82, the first space portion 71 and the plurality of suction holes 73 are blocked. On the other hand, in the second valve body 63, when the seat surface 63c is separated from the seal members 81 and 82, the first space portion 71 and the plurality of suction holes 73 communicate with each other.

The pressing member 64 has a cylindrical shape. The pressing member 64 presses the valve casing 61 against the cylinder block 38. In other words, in the pressing member 64, a plurality of attachment holes 91 (e.g., eight holes) are provided in the vertical direction VD at intervals in the circumferential direction. An upper surface of the pressing member 64 is in contact with the lower surface of the cylinder block 38 and the lower surface of the flange 61b in the valve casing 61. In this state, a plurality of fastening bolts 92 are inserted into the respective attachment holes 91 of the pressing member 64 from below, and each of front end portions of the fastening bolts 92 is screwed into a screw hole of the cylinder block 38. When the pressing member 64 is fastened to the cylinder block 38, the valve casing 61 is pressed by the pressing member 64 in a state of being arranged in the recess 52, and is supported by the cylinder block 38.

An outer diameter of the pressing member 64 is substantially the same as an outer diameter of the cylinder block 38, and an inner diameter is larger than the diameter at the position where the plurality of suction holes 73 are formed. Therefore, lower end openings of the plurality of suction holes 73 and lower end openings of the plurality of first discharge holes 74 are exposed on the inside of the pressing member 64. A plurality of suction pipes (fluid suction paths) 93 are supported by the pressing member 64 via a support member. Each of the plurality of suction pipes 93 has a U shape, and one end and the other end face upward in the vertical direction VD. The plurality of suction pipes 93 have one end that is connected to corresponding lower end opening of the plurality of suction holes 73 in the suction valve 41, and the other end that opens into the inside of the vessel 39 (see FIG. 2).

Since the pressing member 64 has the cylindrical shape, a second space portion 94 is provided inside an inner peripheral surface 64a. The second space portion 94 communicates with the plurality of first discharge holes 74 located above. The second space portion 94 communicates with the inside of the vessel 39 (see FIG. 2), in other words, communicates with a space filled with liquid hydrogen. Therefore, the liquid hydrogen and the hydrogen gas in the first space portion 71 are discharged into the liquid hydrogen in the second space portion 94 through the first discharge holes 74.

In addition, the pressing member 64 is provided with a plurality of second discharge holes 95 (e.g., eight holes) in the radial direction intersecting the vertical direction VD at intervals in the circumferential direction. The second discharge holes 95 discharge the hydrogen gas discharged from the first space portion 71 to the second space portion 94 through the first discharge holes 74 to the outside of the pressing member 64 in the radial direction.

The first discharge holes 74 are disposed in the vertical direction VD, and the second discharge holes 95 are disposed in a horizontal direction (radial direction). The second discharge hole 95 has one end that communicates with the first discharge hole 74 via the second space portion 94, and the other end that opens into the inside of the vessel 39 (see FIG. 2), which is the outside. The plurality of second discharge holes 95 are provided in the radial direction of the pressing member 64 and at intervals in the circumferential direction of the pressing member 64. Each of the plurality of second discharge holes 95 has a slit shape that opens upward in the vertical direction VD of the pressing member 64. A lower surface of each of the second discharge holes 95 having the slit shape extends in the horizontal direction. However, the lower surface of each of the second discharge holes 95 having the slit shape may be inclined upward from the center of the pressing member 64 toward the outside, for example, in a range of 5 degrees to 30 degrees with respect to the horizontal direction.

The discharge valve 42 is a check valve and is disposed on the side of the cylinder block 38. The discharge valve 42 includes a valve casing 101, a ball 102, a support 103, and a compression coil spring 104.

The valve casing 101 has a hollow shape and includes an inflow hole 101a and a discharge hole 101b. The inflow hole 101a communicates with the compression chamber 43, and the discharge hole 101b communicates with a discharge path (not illustrated) of hydrogen gas. The ball 102 can open and close the discharge hole 101b. The support 103 supports the ball 102 and transmits a biasing force of the compression coil spring 104 to the ball 102.

The discharge valve 42 is opened when a pressure of the liquid hydrogen in the compression chamber 43 becomes higher than or equal to a preset high pressure. In other words, when the pressure of the liquid hydrogen in the compression chamber 43 is less than the high pressure, the ball 102 closes the discharge hole 101b by the biasing force of the compression coil spring 104. On the other hand, when the pressure of the liquid hydrogen in the compression chamber 43 becomes higher than or equal to the high pressure, the pressure of the liquid hydrogen becomes larger than the biasing force of the compression coil spring 104, and the ball 102 operates to open the discharge hole 101b.

In addition, the pressurizing pump 32 includes a strainer 44. The strainer 44 is provided in each of the plurality of suction pipes 93 of the pressurizing pump 32. The strainer 44 is attached to the other end of the suction pipe 93 having one end connected to the suction valve 41. The strainer 44 removes foreign matter mixed in the liquid hydrogen.

### <Strainer>

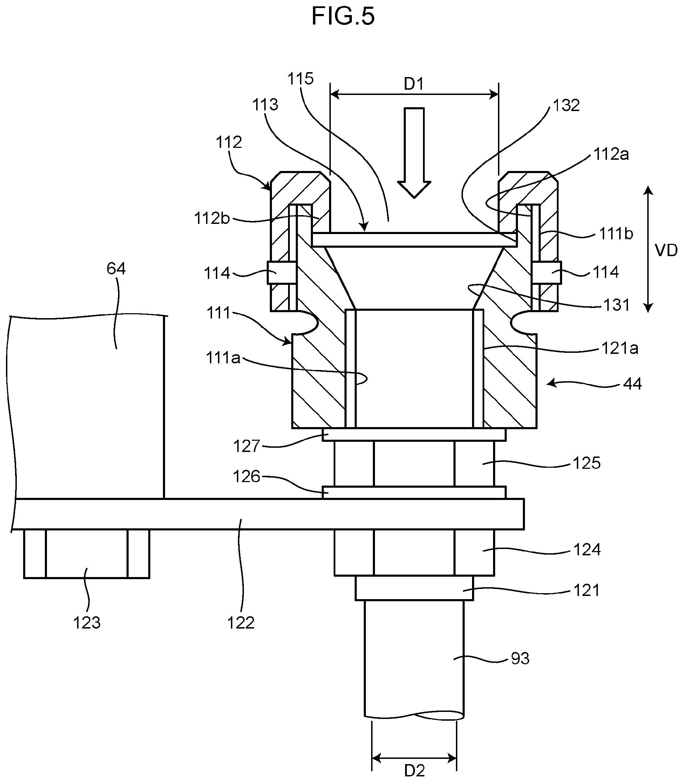

FIG. 5 is a longitudinal sectional view illustrating the strainer.

As illustrated in FIG. 5, a main body 111, a pressing member 112, and a filter unit 113 are included.

The suction pipe 93 has the other end opened upward in the vertical direction VD. A lower end of a coupling pipe 121 is integrally connected to the other end of the suction pipe 93. A coupling flange 122 is disposed in the horizontal direction, and one end is fixed to a lower part of the pressing member 64 of the suction valve 41 by a bolt 123. The coupling pipe 121 penetrates the other end of the coupling flange 122, and is fixed by a pair of nuts 124 and 125. The coupling pipe 121 has male threaded portion 121a formed on an upper outer periphery. The main body 111 has a cylindrical shape, and a female threaded portion 111a is formed on an inner periphery of a lower part. The main body 111 is fixed by screwing the female threaded portion 111a onto the male threaded portion 121a of the coupling pipe 121. Note that a washer 126 is disposed between the coupling flange 122 and the nut 125, and a washer 127 is disposed between the nut 125 and the main body 111.

In the main body 111, a diameter-reduced portion 131 is provided above the female threaded portion 111a, a stepped portion 132 is provided above the diameter-reduced portion 131, and the stepped portion 132 opens upward. The diameter-reduced portion 131 has a truncated cone shape in which a passage area decreases from the stepped portion 132 toward the female threaded portion 111a. The stepped portion 132 has an inner diameter larger than the maximum inner diameter of the diameter-reduced portion 131. The filter unit 113 has a disk shape and is disposed on the stepped portion 132 of the main body 111. An outer diameter of the filter unit 113 is equal to or slightly smaller than an inner diameter of the stepped portion 132 of the main body 111.

The pressing member 112 presses and fixes the filter unit 113 to the main body 111. The pressing member 112 has a cylindrical shape. The main body 111 has a male threaded portion 111b formed on an upper outer periphery. The pressing member 112 has a female threaded portion 112a formed on an inner periphery. In addition, the pressing member 112 is provided with a pressing portion 112b on an upper inner periphery. The pressing member 112 is fixed by screwing the female threaded portion 112a onto the male threaded portion 111b of the main body 111. At this time, in the pressing member 112, the pressing portion 112b presses and fixes an outer periphery of the filter unit 113 disposed on the stepped portion 132 of the main body 111. Then, the pressing member 112 is locked to the main body 111 by a plurality of detent bolts 114.

### <Filter Unit>

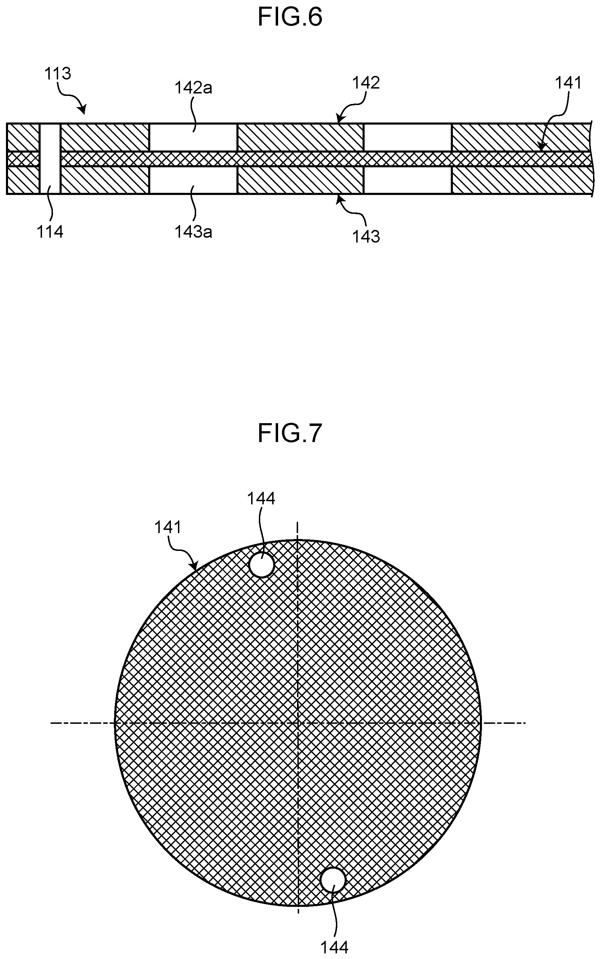

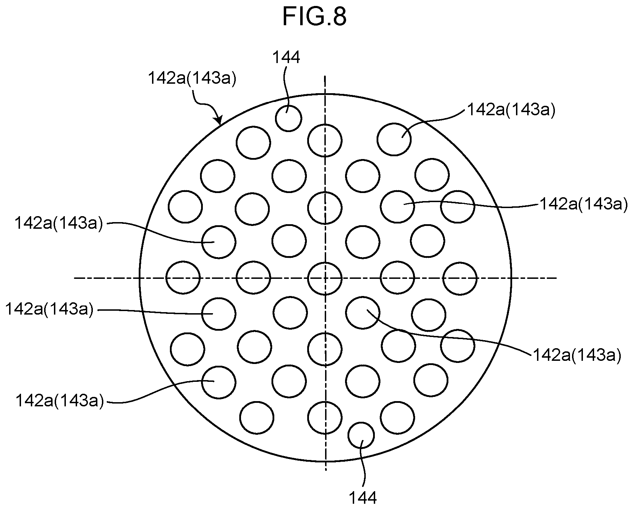

FIG. 6 is a cross-sectional view illustrating a main part of a filter unit, FIG. 7 is a front view of a filter, and FIG. 8 is a front view illustrating a first support member and a second support member.

As illustrated in FIGS. 5 and 6, the filter unit 113 includes a filter 141, a first support member 142, and a second support member 143. The pressing member 112 fixes the first support member 142 and the second support member 143 sandwiching the filter 141 onto the main body 111.

As illustrated in FIGS. 6 and 7, the filter 141 has a meshed disk shape. Liquid hydrogen (fluid) can pass through the filter 141. An opening of the filter 141 is smaller than a sliding gap of the first valve body 62 in the suction valve 41. In other words, the opening of the filter 141 is smaller than a gap between the rod 62a of the first valve body 62 and the through hole 72 of the valve casing 61 in the suction valve 41. Specifically, the filter 141 has, for example, 250 mesh (opening of 62 µ), but is not limited to this size.

As illustrated in FIGS. 6 and 8, the first support member 142 and the second support member 143 have the same disk shape. However, the first support member 142 and the second support member 143 may have different shapes. Outer diameters of the first support member 142 and the second support member 143 are the same as an outer diameter of the filter 141. The first support member 142 and the second support member 143 sandwich the filter 141 from both sides in the thickness direction. The liquid hydrogen (fluid) can pass through the first support member 142 and the second support member 143.

The first support member 142 and the second support member 143 are formed of punching metal, and have a plurality of openings 132a and 133a. In other words, the first support member 142 and the second support member 143 are preferably members having higher strength than the filter. When the first support member 142 and the second support member 143 sandwich the filter 141 from both sides in the thickness direction, the plurality of openings 132a and 133a are arranged to face each other. A plurality of positioning members 134 (two members in the present embodiment) that perform positioning in the circumferential direction are provided between the filter 141 and the first support member 142 and the second support member 143. The positioning member 134 is provided in the first support member 142 and is fitted into holes formed in the filter 141 and the second support member 143. However, the positioning member 134 may be provided on the filter 141 or the second support member 143.

The filter 141 has a mesh shape (e.g., 250 mesh/opening of 62 µ). Since the first support member 142 and the second support member 143 are formed of the punching metal, openings of the first support member 142 and the second support member 143 are larger than an opening of the filter 141. In other words, when the liquid hydrogen passes through the filter unit 113, the first support member 142 and the second support member 143 act as resistance with respect to the filter 141 to suppress the generation of a pressure loss.

However, the first support member 142 and the second support member 143 are not limited to the punching metal. The first support member 142 and the second support member 143 may have the mesh shape using a wire mesh. However, the first support member 142 and the second support member 143 preferably have the mesh shape with the opening larger than the opening of the filter 141.

As illustrated in FIG. 5, in the strainer 44, an outer surface of the filter unit is exposed to the outside by the main body 111 and the pressing member 112, and a suction port 115 is provided on the outer surface. The filter unit 113 (filter 141) is disposed on the suction port 115 of the strainer 44. The main body 111 is provided with the diameter-reduced portion 131 on a downstream side of the filter unit 113 in a suction direction of liquid hydrogen. The diameter-reduced portion 131 is provided in a passage between the filter unit 113 and the other end of the suction pipe 93 (coupling pipe 121), and a passage area decreases toward the downstream side in the suction direction of liquid hydrogen. In other words, in the strainer 44, due to the diameter-reduced portion 131, an inner diameter D1 (opening area) of the suction port 115 is larger than an inner diameter D2 (passage area) of the other end portion of the suction pipe 93.

### <Operation of Pressurizing Pump>

As illustrated in FIG. 3, when the piston 37 moves (rises) from a bottom dead center to a top dead center via the piston rod 36 in the suction process of the pressurizing pump 32, a volume of the compression chamber 43 expands, and the pressure in the compression chamber 43 becomes a negative pressure. At this time, an ascending force (suction force) overcomes the biasing force of the compression coil spring 77, and the first valve body 62 moves upward. As a result, the seat surface 62d of the head 62b is separated from the valve seat 53a. Then, the first valve body 62 opens the flow hole 53, and the compression chamber 13 and the first space portion 71 communicate with each other. When the negative pressure in the compression chamber 43 acts on the second valve body 63 through the flow hole 53, the second valve body 63 moves upward by the negative pressure, and the seat surface 63c is separated from the seal members 81 and 82. Then, the second valve body 63 allows the first space portion 71 and the suction holes 73 to communicate with each other. Therefore, the suction valve 41 sucks external liquid hydrogen from the suction pipes 93 into the first space portion 71 through the suction holes 73, and further sucks the liquid hydrogen into the compression chamber 43 through the flow hole 53.

In the compression process of the pressurizing pump 32, when the piston 37 moves (descends) to the top dead center or the bottom dead center via the piston rod 36, the volume of the compression chamber 43 is reduced, and the pressure in the compression chamber 43 becomes a positive pressure. At this time, since the suction force decreases, the first valve body 62 moves downward by the biasing force of the compression coil spring 77, and the seat surface 62d of the head 62b is seated on the valve seat 53a. Then, the first valve body 62 closes the flow hole 53, and the compression chamber 13 and the first space portion 71 are blocked. When the positive pressure in the compression chamber 43 acts on the second valve body 63 through the flow hole 53, the second valve body 63 moves downward due to a decrease in the suction force, and the seat surface 63c is seated on the seal members 81 and 82. Then, the second valve body 63 blocks the first space portion 71 and each suction hole 73.

When the piston 37 further descends, the volume of the compression chamber 43 is further reduced, and the pressure in the compression chamber 43 becomes high. At this time, when the pressure of the liquid hydrogen in the compression chamber 43 becomes a predetermined high pressure or more, the pressure of the liquid hydrogen becomes larger than the biasing force of the compression coil spring 104, and the ball 102 operates to open the discharge hole 101b. Therefore, the discharge valve 42 discharges high-pressure liquid hydrogen in the compression chamber 43 to the outside of the cylinder block 38 through the inflow hole 101a and the discharge hole 101b.

Still more, in the compression process of the pressurizing pump 32, while the first valve body 62 descends and the seat surface 62d of the head 62b is seated on the valve seat 53a to close the flow hole 53, a portion of high-pressure liquid hydrogen in the compression chamber 13 leaks into the first space portion 71 through the flow hole 53. The high-pressure liquid hydrogen leaking into the first space portion 71 is discharged into the liquid hydrogen in the second space portion 94 in the atmospheric pressure state through the first discharge holes 74. However, the high-pressure liquid hydrogen leaking into the first space portion 71 is partially gasified gas (hydrogen gas), and the hydrogen gas in the second space portion 94 flows in the horizontal direction through the second discharge holes 95 and is discharged to the outside of the outer peripheral side of the pressing member 64.

When the negative pressure in the compression chamber 43 acts on the suction valve 41 in the suction process of the pressurizing pump 32, external liquid hydrogen is sucked into the suction pipe 93 through the strainer 44 and supplied to the compression chamber 43. At this time, when foreign matter is mixed in the liquid hydrogen, the foreign matter is removed by the filter 141 (see FIG. 6) of the strainer 44, and is prevented from entering the suction valve 41.

Further, since the suction and discharge of the liquid hydrogen are repeatedly performed in the pressurizing pump 32, a stress in the thickness direction repeatedly acts on the filter unit 113 of the strainer 44. In other words, as illustrated in FIGS. 5 and 6, when liquid hydrogen is sucked by the pressurizing pump 32, external liquid hydrogen flows into the suction pipe 93, and thus, the pressure of the liquid hydrogen acts on the filter unit 113 in the sequence of the first support member 142, the filter 141, and the second support member 143, and the filter unit 113 is deformed inward (toward the suction pipe 93). On the other hand, at the time of discharging the liquid hydrogen by the pressurizing pump 32, since there is no flow of the liquid hydrogen from the outside to the suction pipe 93, the pressure of the liquid hydrogen does not act on the filter unit 113, and the deformation of the filter unit 113 toward the inside (toward the suction pipe 93) returns to the original state.

During the operation of the pressurizing pump 32, stress in the thickness direction repeatedly acts on the filter unit 113 of the strainer 44, but since the filter 141 is sandwiched between the first support member 142 and the second support member 143, damage due to deformation is suppressed.

### [Second Embodiment]

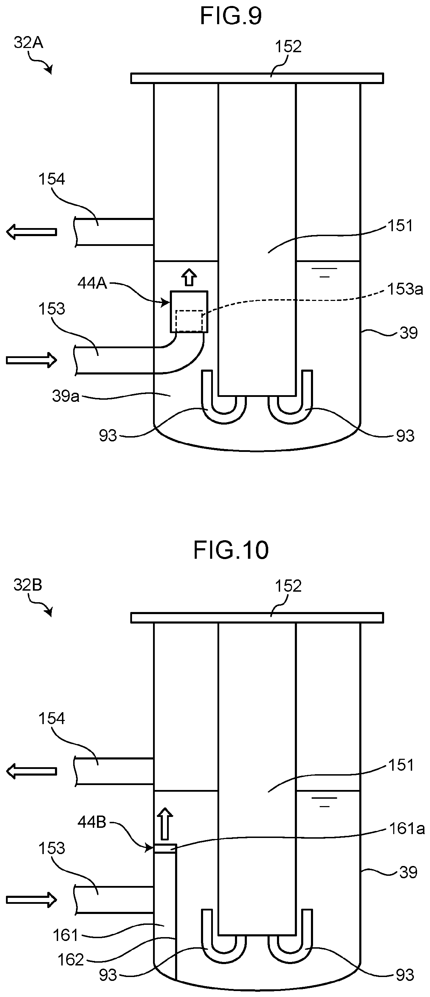

FIG. 9 is a schematic diagram illustrating a main part of a pressurizing pump according to a second embodiment. Note that members having functions similar to those of the above-described embodiment are denoted by the same reference numerals, and detailed description thereof is omitted.

As illustrated in FIG. 9, a pressurizing pump 32A includes a vessel 39. In the pressurizing pump 32A, a cylinder, a piston, and a pump unit 151 such as a suction valve and a discharge valve are arranged inside the vessel 39. The vessel 39 is a pressure vessel that stores liquid hydrogen, and has an upper end suspended and supported by a frame 152. An upper end of the pump unit 151 is suspended and supported, inside the vessel 39, by the frame 152. A supply pipe 153 and a gas discharge pipe 154 are connected to the side of the vessel 39. The supply pipe 153 is a pipe for supplying liquid hydrogen from an external supply source to a liquid storage chamber 39a of the vessel 39. The gas discharge pipe 154 is a pipe for discharging a component vaporized (hydrogen gas) in the liquid storage chamber 39a to the outside. The gas discharge pipe 154 is disposed at a position above and spaced apart from the supply pipe 153.

In addition, the pressurizing pump 32A includes a strainer 44A. The strainer 44A is provided in the supply pipe 153 of the pressurizing pump 32A. The supply pipe 153 passes through the side of the vessel 39 from the outside, and an end 153a is bent upward. The end 153a of the supply pipe 153 is immersed in the liquid hydrogen in the liquid storage chamber 39a. The strainer 44A is attached to the end 153a bent upward. The strainer 44A removes foreign matter mixed in liquid hydrogen. The strainer 44A has the same structure as the strainer 44 of the first embodiment.

In the pressurizing pump 32A, external liquid hydrogen is supplied to the liquid storage chamber 39a of the vessel 39 through the supply pipe 153. At this time, when foreign matter is mixed in the liquid hydrogen, the foreign matter is removed by the filter 141 (see FIG. 6) of the strainer 44A, and is prevented from entering the suction valve 41.

### [Third Embodiment]

FIG. 10 is a schematic diagram illustrating a main part of a pressurizing pump of a third embodiment. Note that members having functions similar to those of the above-described embodiment are denoted by the same reference numerals, and detailed description thereof is omitted.

As illustrated in FIG. 10, a pressurizing pump 32B includes the vessel 39. In the pressurizing pump 32B, the cylinder, the piston, and the pump unit 151 such as the suction valve and the discharge valve are arranged inside the vessel 39. The vessel 39 is a pressure vessel that stores liquid hydrogen, and has an upper end suspended and supported by the frame 152. An upper end of the pump unit 151 is suspended and supported, inside the vessel 39, by the frame 152. The supply pipe 153 and the gas discharge pipe 154 are connected to the side of the vessel 39. The supply pipe 153 is a pipe for supplying liquid hydrogen from an external supply source to a liquid storage chamber 39a of the vessel 39. The gas discharge pipe 154 is a pipe for discharging a component vaporized (hydrogen gas) in the liquid storage chamber 39a to the outside. The gas discharge pipe 154 is disposed at a position above and spaced apart from the supply pipe 153.

The pressurizing pump 32B includes a strainer 44B. The strainer 44B is provided at an outlet 161a of a chamber 161 of the pressurizing pump 32B. In a lower part of the vessel 39, the chamber 161 is partitioned by an isolation wall 162. The supply pipe 153 passes through the side of the vessel 39 from the outside and communicates with the chamber 161. An upper part of the chamber 161 is provided with the outlet 161a communicating with the liquid storage chamber 39a. The strainer 44A is attached to the outlet 151a that opens upward. The strainer 44B removes foreign matter mixed in the liquid hydrogen. The strainer 44B has the same structure as the strainer 44 of the first embodiment.

In the pressurizing pump 32B, external liquid hydrogen is supplied to the chamber 161 of the vessel 39 through the supply pipe 153, and is supplied from the chamber 161 to the liquid storage chamber 39a. At this time, when foreign matter is mixed in the liquid hydrogen, the foreign matter is removed by the filter 141 (see FIG. 6) of the strainer 44B, and is prevented from entering the suction valve 41.

### [Effects of Present Embodiments]

A pressurizing pump according to a first aspect includes the cylinder block (cylinder) 38 having the compression chamber 43, the piston 37 movably supported inside the cylinder block 38 to compress liquid hydrogen (fluid) sucked into the compression chamber 43, the suction valve 41 configured to suck the liquid hydrogen from a fluid suction path into the compression chamber 43, the discharge valve 42 configured to discharge the liquid hydrogen compressed by the piston 37, and the strainers 44, 44A, or 44b provided in the fluid suction path. The strainers 44, 44A, and 44B include the filter 141 having the mesh shape, and the first support member 142 and the second support member 143 that sandwich the filter 141 from both sides in the thickness direction and through which the liquid hydrogen can pass.

According to the pressurizing pump of the first aspect, when the liquid hydrogen is supplied to the suction valve 41 through the fluid suction path, the strainer 44, 44A, or 44B removes foreign matter mixed in the liquid hydrogen by the filter 141, so that the entry of the foreign matter into the suction valve 41 is prevented and damage to the pressurizing pump 32, 32A, or 32B can be suppressed. In addition, since the filter unit 113 is configured by sandwiching the filter 141 between the first support member 142 and the second support member 143 from both sides in the thickness direction, rigidity of the filter unit 113 is improved, and damage to the filter 141 can be suppressed to improve durability.

A pressurizing pump according to a second aspect is the pressurizing pump according to the first aspect, in which the opening of the first support member 142 and the second support member 143 is larger than the opening of the filter 141. As a result, it is possible to suppress the occurrence of a pressure loss caused by the first support member 142 and the second support member 143.

A pressurizing pump according to a third aspect is the pressurizing pump according to the first aspect or the second aspect, in which the opening of the filter 141 is smaller than the sliding gap of the first valve body 62 in the suction valve 41. As a result, it is possible to suppress damage caused by foreign matter mixed in the liquid hydrogen entering the sliding gap of the first valve body 62.

A pressurizing pump according to a fourth aspect is the pressurizing pump according to any one of the first aspect to the third aspect, in which the first support member 142 and the second support member 143 are punching metals, and the openings 142a and 143a are arranged to face each other in a state where the filter 141 is sandwiched from both sides in the thickness direction. As a result, rigidity of the filter 141 can be appropriately improved.

A pressurizing pump according to a fifth aspect is the pressurizing pump according to any one of the first aspect to the fourth aspect, and further includes the positioning member 144 that performs positioning in the circumferential direction between the filter 141 and the first support member 142 and the second support member 143. As a result, the filter 141, the first support member 142, and the second support member 143 can be appropriately positioned by the positioning member 144.

A pressurizing pump according to a sixth aspect is the pressurizing pump according to any one of the first aspect to the fifth aspect, and further includes the suction pipe 93 having one end connected to the suction valve 41, and the strainer 44 is attached to the other end of the suction pipe 93. As a result, attachment of the strainer 44 to the end of the suction pipe 93 facilitates replacement of the filter 141, and thus maintainability can be improved.

A pressurizing pump according to a seventh aspect is the pressurizing pump according to the sixth aspect, in which an opening area of the suction port 115 of the strainer 44 is larger than a passage area of the other end of the suction pipe 93. As a result, the occurrence of a pressure loss can be suppressed.

A pressurizing pump according to an eighth aspect is the pressurizing pump according to the seventh aspect, in which the filter 141 is disposed in the suction port 115 of the strainer 44, and the diameter-reduced portion 131 in which a passage area decreases in the suction direction of liquid hydrogen is provided in a passage between the filter 141 and the other end of the suction pipe 93. As a result, the occurrence of a pressure loss can be suppressed, and a smooth flow of liquid hydrogen can be ensured.

A pressurizing pump according to a ninth aspect is the pressurizing pump according to any one of the sixth aspect to the eighth aspect, in which the strainer 44 further includes the main body 111 fixed to the suction pipe 93, and the pressing member 112 that fixes the first support member 142 and the second support member 143 sandwiching the filter 141 onto the main body 111. As a result, the filter unit 113 can be appropriately attached to the end of the suction pipe 93.

A pressurizing pump according to a tenth aspect is the pressurizing pump according to any one of the first aspect to the fifth aspect, and further includes the vessel 39 that stores liquid hydrogen in which the suction hole 73 communicating with the suction valve 41 is immersed, and the supply pipe 153 that supplies the liquid hydrogen to the vessel 39. The strainer 44A is attached to the supply pipe 153. As a result, the mountability of the strainer 44A can be improved.

A pressurizing pump according to an eleventh aspect is the pressurizing pump according to any one of the first aspect to the fifth aspect, and further includes the vessel 39 that stores liquid hydrogen in which the suction hole 73 communicating with the suction valve 41 is immersed, the supply pipe 153 that supplies the liquid hydrogen to the vessel 39, and the chamber 161 communicating with a downstream end of the supply pipe 153 inside the vessel 39. The strainer 44B is attached to the outlet 161a of the chamber 161. As a result, the mountability of the strainer 44B can be improved.

A fluid supply system according to a twelfth aspect includes the compression device 21 that includes the pressurizing pump 32, 32A, or 32B according to any one of the first aspect to the eleventh aspect and compresses liquid hydrogen (fluid), the evaporation device 22 that vaporizes the liquid hydrogen compressed by the compression device 21, and the dispenser 23 that supplies gas vaporized by the evaporation device 22. As a result, foreign matter mixed in the liquid hydrogen is removed by the filter 141 of the strainer 44, 44A, or 44B, and the foreign matter is prevented from entering the suction valve 41. As a result, damage to the pressurizing pump 32, 32A, or 32B can be suppressed. In addition, rigidity of the filter unit 113 can be improved, and damage to the filter 141 can be suppressed to improve durability.

### Reference Signs List

- 10: HYDROGEN SUPPLY SYSTEM (FLUID SUPPLY SYSTEM)
- 11: CONTAINER
- 12: VEHICLE
- 21: COMPRESSION DEVICE
- 22: EVAPORATION DEVICE
- 23: DISPENSER
- 31: DRIVE MOTOR
- 32, 32A, 32B: PRESSURIZING PUMP
- 33: SPEED REDUCER
- 34: CRANK MECHANISM
- 35: CROSSHEAD
- 36: PISTON ROD
- 37: PISTON
- 38: CYLINDER BLOCK (CYLINDER)
- 39: VESSEL
- 41: SUCTION VALVE
- 42: DISCHARGE VALVE
- 43: COMPRESSION CHAMBER
- 44, 44A, 44B: STRAINER
- 51: FITTING HOLE
- 52: RECESS
- 53: FLOW HOLE
- 61: VALVE CASING
- 62: FIRST VALVE BODY
- 63: SECOND VALVE BODY
- 64: PRESSING MEMBER
- 71: FIRST SPACE PORTION
- 72: THROUGH HOLE
- 73: SUCTION HOLE (SUCTION FLOW PATH)
- 74: FIRST DISCHARGE HOLE
- 75: NUT
- 76: SPRING RECEIVER
- 77: COMPRESSION COIL SPRING
- 81, 82: SEAL MEMBER
- 91: ATTACHMENT HOLE
- 92: FASTENING BOLT
- 93: SUCTION PIPE (FLUID SUCTION PATH)
- 94: SECOND SPACE PORTION
- 95: SECOND DISCHARGE HOLE
- 101: VALVE CASING
- 102: BALL
- 103: SUPPORT
- 104: COMPRESSION COIL SPRING
- 111: MAIN BODY
- 112: PRESSING MEMBER
- 113: FILTER UNIT
- 114: DETENT BOLT
- 121: COUPLING PIPE
- 122: COUPLING FLANGE
- 123: BOLT
- 124, 125: NUT
- 126, 127: WASHER
- 131: DIAMETER-REDUCED PORTION
- 132: STEPPED PORTION
- 141: FILTER
- 142: FIRST SUPPORT MEMBER
- 143: SECOND SUPPORT MEMBER
- 144: POSITIONING MEMBER
- 151: PUMP UNIT
- 152: FRAME
- 153: SUPPLY PIPE (FLUID SUCTION PATH)
- 154: GAS DISCHARGE PIPE
- 161: CHAMBER (FLUID SUCTION PATH)
- 162: ISOLATION WALL

## Claims

1. A pressurizing pump comprising:
a cylinder that includes a compression chamber;
a piston that is movably supported inside the cylinder to compress a fluid sucked into the compression chamber;
a suction valve that sucks the fluid into the compression chamber from a fluid suction path;
a discharge valve that discharges the fluid compressed by the piston; and
a strainer that is provided in the fluid suction path, wherein
the strainer includes a filter that has a mesh shape, and
a first support member and a second support member that sandwich the filter from both sides in a thickness direction and allow the fluid to pass through.

2. The pressurizing pump according to claim 1, wherein an opening of the first support member and the second support member is larger than an opening of the filter.

3. The pressurizing pump according to claim 1 or 2, wherein an opening of the filter is smaller than a sliding gap of a valve body in the suction valve.

4. The pressurizing pump according to claim 1, wherein
the first support member and the second support member are formed of punching metal, and
a plurality of openings are arranged to face each other in a state where the first support member and the second support member sandwich the filter from the both sides in the thickness direction.

5. The pressurizing pump according to claim 1, further comprising a positioning member that performs positioning in a circumferential direction between the filter and the first support member and the second support member.

6. The pressurizing pump according to claim 1, further comprising a suction pipe that has one end connected to the suction valve, wherein the strainer is attached to another end of the suction pipe.

7. The pressurizing pump according to claim 6, wherein the strainer has a suction port with an opening area larger than a passage area of the other end of the suction pipe.

8. The pressurizing pump according to claim 7, wherein
the filter is disposed on the suction port of the strainer, and
a diameter-reduced portion in which a passage area decreases in a suction direction of the fluid is provided in a passage between the filter and the other end of the suction pipe.

9. The pressurizing pump according to claim 6, wherein the strainer includes a main body fixed to the suction pipe, and a pressing member that fixes the first support member and the second support member sandwiching the filter onto the main body.

10. The pressurizing pump according to claim 1, further comprising:
a vessel that stores a fluid in which a fluid suction hole communicating with the suction valve is immersed; and
a supply pipe that supplies the fluid to the vessel,
wherein the strainer is attached to the supply pipe.

11. The pressurizing pump according to claim 1, further comprising:
a vessel that stores a fluid in which a fluid suction hole communicating with the suction valve is immersed;
a supply pipe that supplies the fluid to the vessel; and
a chamber that communicates with a downstream end of the supply pipe inside the vessel,
wherein the strainer is attached to an outlet of the chamber.

12. A fluid supply system comprising:
a compression device that includes the pressurizing pump according to claim 1 and compresses a fluid;
an evaporation device that vaporizes the fluid compressed by the compression device; and
a dispenser that supplies gas vaporized by the evaporation device.
